# EUROPEAN PATENT SPECIFICATION

(11) **EP 0 446 249 B1**
(45) Date of publication and mention of the grant of the patent: **03.08.1994**
(21) Application number: 89913162.7
(22) Date of filing: 01.12.1989
(51) Int. Cl.: B65G 1/04, B65G 63/02

(54) **Storage system**
Lagersystem
Système de stockage

(30) Priority: 02.12.1988 FI 885613
(43) Date of publication of application: 18.09.1991
(73) Proprietor: NEKOMAT OY, SF-33800 Tampere (FI)
(72) Inventor: TOIVAKKA, Lauri, SF-33100 Tampere (FI)
(74) Representative: Diehl, Hermann O. Th., Dr.
(86) International application number: FI8900218
(87) International publication number: WO9006273

(56) References cited:
- DK-B- 154 020
- GB-A- 1 111 620
- SE-B- 330 509
- SE-C- 105 271
- US-A- 2 701 065
- US-A- 3 863 777

## Description

The present invention relates to a storage system for stockpiling cases or the like stacked on top of each other.

One known type of storage method is embodied in a manner that the cases are laid on storage tracks, a number of such tracks adjacent to each other. At the first end of storage tracks the case piles are supplied onto the storage tracks and, accordingly, the pick-up of cases for the following process stage is done at the opposite end of storage tracks. This type of storage method and corresponding system is used e.g. in brewery, meat packing and bakery industries. The cases are usually made of a plastic material, being e.g. cases for bottles or bakery products. The storage systems are first of all used as receiving stores of a production plant for receiving the return cases coming from retail business. E.g. in bakery industry, due to hygienic requirements, this intermediate store is unloaded through a washing stage and an intermediate store of clean cases to an actual packing stage, wherein the case is loaded with bakery products. Also this stage is followed by an intermediate storage stage of outgoing cases of bakery products. The above indicates that the storage of cases all the way from receiving point to the delivery of cases containing fresh bakery products is problematic both in terms of required space and production control. The prior art conveyor track stores are first of all unsatisfactory because of high investment costs required thereby. On the other hand, such conveyor tracks cause a substantial space requirement since every sub-store involved in the process requires a separate storage unit which includes a number of conveyor tracks matching the need of this unit. In addition, the cleaning of such conveyor tracks is problematic which is a major drawback particularly in food industry which requires a high standard of hygiene. Thus, e.g. in terms of the requirements of bakery industry, the basis of total storage dimensions must be a possibility of having enough room for the entire number of cases in circulation to be placed in storage facilities located upstream of the actual packing stage of bakery products. It is obvious, however, that e.g. the washing stage of bakery cases may produce such a capacity bottleneck that the intermediate store for cases coming into the washing stage is filled while, at the same time, the intermediate store for cases required in the bakery products packing stage does not include a sufficient number of cases in view of what would be needed in the actual packing stage.

Another type of storage system is shown by SE-C-105 271. Here, objects are stored, row by row, in layers being built on each other one by one. This system permits a large area to be covered by piles of considerable height, but the piles cannot be handled as entities, and the system requires a relatively complicated mechanical structure.

An object of the present invention is to provide a storage system eliminating most of the above problems. This object is achieved by a storage system according to claim 1.

The claimed storage system is capable of providing a reliable storage which is low in investment costs and can be modified in many ways within the basic idea of the invention to suit various types of applications.

The annexed dependent claims directed to a storage system disclose some preferred embodiments of the invention.

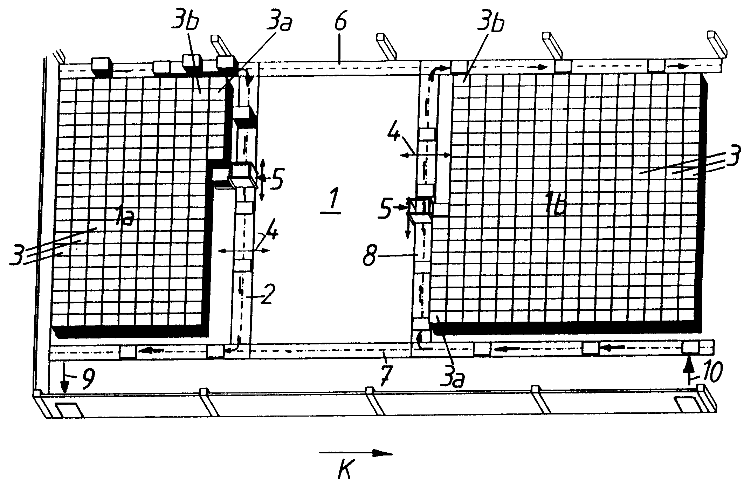

The invention will be described with reference made to the accompanying drawing. The drawing is a plan view of a storage system according to the invention.

The storage system is based on the fact that the storage base comprises a solid horizontal base or support, such as the floor of a storage space. By using a storage conveyor 2 there are case piles laid upon floor 1 in rows 3 which are successively positioned parallel to the longitudinal direction of the storage conveyor. According to the arrow 4, the conveyor is adapted to be movable in a direction substantially parallel with the plane of the base and perpendicular to its longitudinal direction whereby, as the row 3a adjacent to the storage conveyor is either fully loaded or unloaded, the storage conveyor 2 moves above the free area of the base 1 to a position where it can begin either to load the following row upon the base 1 beside said storage conveyor or to unload the first fully loaded row, e.g. a row 3b in the drawing. Thus the storage conveyor assumes a position where it is in connection with the space of the row of case piles to be handled in the next stage.

For the above actions the storage conveyor is provided with a handling mechanism 5 movable in its longitudinal direction. By using handling mechanism 5 provided with means for grasping the lowermost case of the case pile the case piles are carried into rows 3 or case piles are unloaded from a row 3 onto the storage conveyor. The handling mechanism 5 preferably includes case pile building and unloading means, said handling mechanism 5 being capable of building case piles of individual cases or of unloading or dissembling case piles into individual cases. For these purposes the storage conveyor 2 is positioned so that it is beside the case piles in the horizontal direction. It is advantageous to arrange the conveyor directly above said base 1 of course considering the limitations set by the technically adaptable solution.

The embodiment shown in the drawing further includes two cross-conveyors 6 and 7 as well as a second storage conveyor 8 which is parallel to the first, previously mentioned storage conveyor 2.

In particular, the embodiment shown the drawing serves to create a versatile storage entity as follows. Storage conveyors 2, 8 are arranged in connection with both cross-conveyors 6 and 7. Furthermore, a point K in the drawing is provided with a handling stage, such as washing of the cases and/or filling thereof with products. Thus, the first cross-conveyor 6 is adapted to supply case piles or the like and/or cases or the like onto storage conveyor 2 associated with a first sub-storage 1a for placing such items in the first sub-storage 1a in the left-hand side of the drawing. The second cross-conveyor 7 is in turn adapted to receive the case piles and/or the like and/or the cases or the like arriving from storage conveyor 2 associated with first sub-storage 1a for delivering such items along the second cross-conveyor to a handling stage K (arrow 9).

The second cross-conveyor 7 is adapted to receive the case piles or the like and/or the cases or the like arriving from handling stage K for delivering such items along said second cross-conveyor 7 or the like onto a storage conveyor 8 associated with a second sub-storage 1b (arrow 10) for advancing the items to said second sub-storage 1b by means of mechanism 5.

On the other hand, the first cross-conveyor 6 is adapted to receive from a storage conveyor 8 associated with second sub-storage 1b case piles or the like or cases or the like for delivering such items along said second cross-conveyor 6 out of the storage.

The unloading and/or stacking units of case piles can also be installed at the ends of cross-conveyors 6, 7, the storage itself being only intended for handling the piles and the required stacking and unloading operations being effected outside the storage.

Transfers into and, on the other hand, removals from the storage are effected at the opposite ends of the parallel cross-conveyors. It can be said that there is a flow of articles in the storage along two U-shaped tracks, the bottoms of said U-shapes facing each other. It is obvious from the above that the storage offers a lot of benefits particularly when it is dimensioned to substantially match the total number of cases in a given industrial plant. Thus, the following aspects should be noted about the position of storage conveyors. Sub-storage 1a includes a storage reserve which can be transferred through a handling stage K into sub-storage 1b which is a ready-to-go storage. The empty space between storage conveyors 2, 8 always indicates the number of cases that are outside the storage. If the number of cases in handling stage K is subtracted from the above number, the result is the number of cases outside the overall production process.

In particular, the embodiment shown in the drawing is one complete application of a storage system according to the invention.

It is obvious that the basic idea of a method of the invention can be realized by means of a mere storage conveyor for supplying case piles or cases thereon or for unloading such items therefrom. However, the cross-conveyors provide a continuous flow-through of case piles or cases by operating storage conveyor 2. The system can also be applied in association with conveying systems for loading pallets e.g. on interchangeable platforms that are carried from place to place e.g. by means of a truck or the like. Regarding the handling mechanisms 5, reference can be made to the prior art technology which includes a plurality of various applications in terms of loading and unloading as well as transferring of case piles.

## Claims

1. A system for storing cases or the like in the form of successive rows (3) of case piles positioned on a base (1) comprising
at least one storage conveyor (2, 8) for carrying case piles, said storage conveyor (2, 8) being arranged parallel to said rows (3) of piles in the horizontal direction directly above said base (1) and being movable in a direction (4) substantially parallel with the plane of the base (1) and perpendicular to its longitudinal direction to always assume a defined position with respect to the space of the rows (3) of piles to be handled in the next stage,
a handling mechanism (5) with which said storage conveyor (2, 8) is provided, which handling mechanism (5) is movable in the longitudinal direction of the storage conveyor (2, 8) and has means for grasping the lowermost case of the case piles and for carrying them into a row (3) from the conveyor (2, 8) or vice versa, to unload them from a row (3), until the row (3a) adjacent the storage conveyor (2, 8) is either fully loaded or unloaded, and
at least one cross conveyor (6, 7) which is provided on one end and at the same level of the storage conveyor (2, 8) and which is linked to said end for loading case piles onto the storage conveyor (2, 8).

2. The system of claim 1, in which said at least one cross conveyor (6, 7) is arranged perpendicular to the longitudinal direction of said storage conveyor (2, 8).

3. The system of claim 1 or 2, in which one cross conveyor (6) is provided on one end of the storage conveyor (2, 8) and another cross conveyor (7) is provided on the other end of the storage conveyor (2, 8) such that the flow of case piles in the system follows a U-shaped track the bottom of which being formed by the storage conveyor (2, 8).

4. The system of claim 3, in which two storage conveyors (2, 8) are arranged parallel to another between the two cross-conveyors (6, 7) such that two U-shaped tracks for case piles are formed, the bottom of said U-shaped tracks facing each other.

5. The system of claim 4, in which two groups (1a, 1b) of parallel rows (3) of piles are made each of which being arranged within the U of one of the two U-shaped tracks.

6. The system of claim 5 in which a handling stage (K) is provided outside of the two cross conveyors (6, 7) one of the cross conveyors (7) serving to carry cases or case piles taken from a first one of the groups (1a) of rows (3) via the handling mechanism (5) and delivered by the corresponding storage conveyors (2) to the handling stage (K) and for delivery from said case piles to the second group (1b) of rows via the corresponding storage conveyor (8) and its handling mechanism (5).

7. The system of claim 6, in which the other cross conveyor (6) serves for delivering case piles to the first group (1a) of rows via its corresponding storage conveyor (2) and its handling mechanism (5) and for delivering case piles from the second group (1b) of rows via its corresponding storage conveyor (8) and its handling mechanism (5).

## Patentansprüche

1. Vorrichtung zum Lagern von Kisten oder dergleichen in Form von aufeinanderfolgenden Reihen (3) aus Kistenstapeln, die auf einer Basis (1) angeordnet sind, umfassend:
mindestens einen Lagerförderer (2, 8) zum Transport der Kistenstapel, wobei der Lagerförderer (2, 8) parallel zu den Reihen (3) aus Stapeln in der horizontalen Richtung direkt über der Basis (1) und in einer Richtung (4), die im wesentlichen parallel zur Ebene der Basis (1) verläuft, angeordnet sowie senkrecht zu seiner Längsrichtung bewegbar ist, um jeweils eine bestimmte Position hinsichtlich des Raumes der Reihen (3) aus Stapeln einzunehmen, die in der nächsten Stufe gehandhabt werden sollen,
einen Handhabungsmechanismus (5), mit welchem der Lagerförderer (2, 8) ausgestattet ist, wobei der Handhabungsmechanismus (5) in der Längsrichtung des Lagerförderers (2, 8) bewegbar ist und Mittel zum Ergreifen der untersten Kiste der Kistenstapel und zum Befördern derselben vom Förderer (2, 8) zu einer Reihe (3) oder umgekehrt zum Entnehmen derselben von einer Reihe (3) aufweist, bis die dem Lagerförderer (2, 8) benachbarte Reihe (3a) entweder vollständig beladen oder entladen ist,
und mindestens einen Querförderer (6, 7), welcher an einem Ende des Lagerförderers und auf demselben Niveau wie der Lagerförderer (2, 8) vorgesehen ist und welcher zum Verladen von Kistenstapeln auf den Lagerförderer (2, 8) mit diesem Ende verbunden ist.

2. Vorrichtung nach Anspruch 1, wobei der mindestens eine Querförderer (6, 7) senkrecht zur Längsrichtung des Lagerförderers (2, 8) angeordnet ist.

3. Vorrichtung nach Anspruch 1 oder 2, wobei ein Querförderer (6) an einem Ende des Lagerförderers (2, 8) und ein anderer Querförderer (7) am anderen Ende des Lagerförderers (2, 8) vorgesehen ist, derart, daß der Fluß von Kistenstapeln in der Vorrichtung einer U-förmigen Bahn folgt, deren Unterseite durch den Lagerförderer (2, 8) gebildet ist.

4. Vorrichtung nach Anspruch 3, wobei zwei Lagerförderer (2, 8) parallel zueinander zwischen den beiden Querförderern (6, 7) derart angeordnet sind, daß zwei U-förmige Bahnen für Kistenstapel gebildet sind, wobei die Unterseiten der U-förmigen Bahnen einander gegenüberliegen.

5. Vorrichtung nach Anspruch 4, wobei zwei Gruppen (1a, 1b) paralleler Reihen (3) aus Stapeln geschaffen werden, wobei jede innerhalb des Us einer der beiden U-förmigen Bahnen angeordnet ist.

6. Vorrichtung nach Anspruch 5, wobei eine Handhabungsstufe (K) außerhalb der beiden Querförderer (6, 7) vorgesehen ist, wobei einer der Querförderer (7) dazu dient, Kisten oder Kistenstapel, welche von einer ersten der Gruppen (1a) aus Reihen (3) durch den Handhabungsmechanismus (5) entnommen und vom zugeordneten Lagerförderer (2) angeliefert sind, zur Handhabungsstufe (K) zu befördern und die Kistenstapel durch den zugeordneten Lagerförderer (8) und seinen Handhabungsmechanismus (5) zur zweiten Gruppe (1b) aus Reihen zu transportieren.

7. Vorrichtung nach Anspruch 6, wobei der andere Querförderer (6) dazu dient, Kistenstapel über seinen zugeordneten Lagerförderer (2) und seinen Handhabungsmechanismus (5) zur ersten Gruppe (1a) aus Reihen zu befördern und Kistenstapel über seinen zugeordneten Lagerförderer (8) und seinen Handhabungsmechanismus (5) von der zweiten Gruppe (1b) aus Reihen wegzubefördern.

## Revendications

1. Système de stockage de casiers ou analogue sous la forme de rangées successives (3) de piles de casiers positionnées sur une base (1) comprenant;
au moins un convoyeur de stockage (2,8) pour transporter des piles de casiers, ledit convoyeur de stockage (2,8) étant dispose parallèlement auxdites rangées (3) de piles selon la direction horizontale directement au-dessus de ladite base (1) et étant mobile dans une direction (4) sensiblement parallèle au plan de la base (1) et perpendiculaire à sa direction longitudinale pour assumer toujours une position définie par rapport à l'espace de rangées (3) de piles devant être manipulées à l'étape suivante,
un mécanisme de manipulation (5) dont est muni ledit convoyeur de stockage (2,8), lequel mécanisme de manipulation (5) est mobile selon la direction longitudinale du convoyeur de stockage (2,8) et comporte des moyens pour saisir le casier le plus inférieur des piles de casiers et pour les transporter en une rangée (3) depuis le convoyeur (2,8) ou vice versa, pour les décharger depuis une rangée (3), jusqu'à ce que la rangée (3a) voisine du convoyeur de stockage (2,8) soit ou bien totalement chargée ou bien déchargée, et
au moins un convoyeur transversal (6,7) qui est prévu à une extrémité, et au même niveau que le convoyeur de stockage (2,8) et qui est lié à ladite extrémité pour charger des piles de casiers sur le convoyeur de stockage (2,8).

2. Système selon la revendication 1, dans lequel au moins un convoyeur transversal (6,7) est disposé perpendiculairement à la direction longitudinale dudit convoyeur de stockage (2,8).

3. Système selon la revendication 1 ou 2, dans lequel un convoyeur transversal (6) est prévu à une extrémité du convoyeur de stockage (2,8) et un autre convoyeur transversal (7) est prévu à l'autre extrémité du convoyeur de stockage (2,8) de telle sorte que le parcours des piles de casiers dans le système suit une piste en forme de "U", le fond du "U" étant formé par le convoyeur de stockage (2,8).

4. Système selon la revendication 3 dans lequel deux convoyeurs de stockage (2,8) sont disposés parallèlement l'un à l'autre entre les deux convoyeurs transversaux (6,7) de telle sorte que deux pistes en forme de "U" sont réalisées pour les piles de casiers, les fonds desdites pistes en forme de "U" étant disposés face à face.

5. Système selon la revendication 4, dans lequel deux groupes (1a, 1b) de rangées parallèles (3) de piles sont réalisés, dont chacun est disposé à l'intérieur du "U" de l'une des deux piste en forme de "U".

6. Système selon la revendication 5 dans lequel une étape de manipulation (K) est prévu à l'extérieur des deux convoyeurs transversaux (6,7), l'un des convoyeurs transversaux (7) servant à transporter les casiers ou les piles de casiers pris depuis un premier des groupes (1a) de rangées (3) via le mécanisme de manipulation (5) et délivrés par le convoyeur de stockage correspondant (2) à l'étape de manipulation (K) et pour la distribution depuis lesdites piles de casiers au second groupe (1b) de rangées via le convoyeur de stockage correspondant (8) et son mécanisme de manipulation (5).

7. Système selon la revendication 6 dans lequel l'autre convoyeur transversal (6) sert à délivrer des piles de casiers au premier groupe (1a) de rangées via son convoyeur de stockage correspondant (2) et son mécanisme de manipulation (5) et à délivrer des piles de casiers depuis le second groupe (1b) de rangées via son convoyeur de stockage correspondant (8) et son mécanisme de manipulation (5).
